**Europäisches Patentamt**

**European Patent Office**

**Office européen des brevets**

(19)

(11) Veröffentlichungsnummer: **0 024 518**
**B1**

(12) ## EUROPÄISCHE PATENTSCHRIFT

(45) Veröffentlichungstag der Patentschrift:
**07.03.84**

(21) Anmeldenummer: **80103926.4**

(22) Anmeldetag: **09.07.80**

(51) Int. Cl.³: **G 01 L 5/00**, B 29 F 1/06

(54) **Verfahren und Vorrichtung zum Messen der Schliess- und Zuhaltekraft an Druck- und Spritzgiessmaschinen.**

(30) Priorität: **18.07.79 DE 2928940**

(43) Veröffentlichungstag der Anmeldung:
**11.03.81 Patentblatt 81/10**

(45) Bekanntmachung des Hinweises auf die Patenterteilung:
**07.03.84 Patentblatt 84/10**

(84) Benannte Vertragsstaaten:
**AT CH FR GB IT LI**

(56) Entgegenhaltungen:
**DE - C - 1 074 222**
**US - A - 170 467**
**US - A - 264 435**
**US - A - 3 579 741**
**US - A - 3 840 313**
**US - A - 3 897 680**

(73) Patentinhaber: **MANNESMANN DEMAG KUNSTSTOFFTECHNIK ZWEIGNIEDERLASSUNG DER MANNESMANN DEMAG AKTIENGESELLSCHAFT,**
**Rennweg 37, D-8500 Nürnberg (DE)**

(72) Erfinder: **Blüml, Hans, Kappelstrasse 32,**
**D-8501 Burgthann (DE)**
Erfinder: **Schmidt, Gerhard, Ludwig-Thoma-Strasse 8,**
**D-8501 Wendelstein (DE)**

(74) Vertreter: **LOUIS, PÖHLAU, LOHRENTZ & SEGETH,**
**Kesslerplatz 1, D-8500 Nürnberg (DE)**

Verfahren und Vorrichtung zum Messen der Schliess- und Zuhaltekraft an Druck- und Spritzgiessmaschinen

Die Erfindung betrifft ein Verfahren zum Messen der Werkzeug-Schliess-und Zuhaltekraft an Druck- und Spritzgiessmaschinen, deren Schliesseinrichtung eine längs Holmen bewegbare Werkzeugaufspannplatte sowie einen an der Werkzeugaufspannplatte angreifenden und sich an einer von den Holmen gehaltenen Endplatte abstützenden Kniehebelmechanismus aufweist, bei dem eine elastische Verformung an einem Teil der Schliesseinrichtung als Mass für die Schliess- und Zuhaltekraft ermittelt wird. Weiterhin betrifft die Erfindung eine Vorrichtung zur Durchführung dieses Verfahrens.

Die am Werkzeug wirkende Zuhaltekraft an Druck- und Spritzgiessmaschinen bestimmt wesentlich die Qualität des Spritzlings. Liegt sie nämlich nicht ausreichend hoch über der Auftriebskraft im Werkzeug, dann besteht eine Neigung zum «Atmen» des Werkzeugs in der Trennebene, das zur Gratbildung am Spritzling führt. Da die Schliess- und Zuhaltekraft sich während des Betriebes der Maschine durch Temperatureinflüsse verändern kann, ist es notwendig, sie fortwährend zu überwachen, um gegebenenfalls Korrekturen in der Einstellung der Werkzeughöhe vornehmen zu können.

Es ist bereits bekannt, die Schliess- und Zuhaltekraft an Giessmaschinen durch Dehnmessstreifen zu messen, die an den Holmen der Schliesseinrichtung angeordnet sind (US-A- 38 40 313). Dieses Verfahren ist jedoch deshalb nachteilig, weil - wie sich gezeigt hat - die Kräfteverteilung in den Holmen oft nicht gleichmässig ist, z.B. infolge nicht paralleler Werkzeugflächen, so dass die Messung nur an einem Holm zu unrichtigen Rückschlüssen über die tatsächliche Höhe der Schliess- und Zuhaltekraft führt. Eine Messung an allen vier Holmen der Giessmaschine mittels daran angeordneter Dehnmessstreifen und eine Umrechnung der ggf. unterschiedlichen Messwerte auf die wirkende Gesamtkraft ist aber ausgesprochen aufwendig und umständlich.

Ein weiterer Nachteil der Messung der elastischen Dehnung an den Holmen, sei es mittels Dehnmessstreifen oder mittels anderer Messwertaufnehmer, besteht darin, dass der an den Holmen zur Verfügung stehende Platz für das Anbringen der Messwertgeber ausgesprochen beschränkt ist. Denn die zur Verfügung stehende Holmlänge wird beim Schliessen und Öffnen des Werkzeuges weitgehend von der beweglichen Werkzeugaufspannplatte überfahren. Deshalb besteht auch immer die Gefahr, dass die Messvorrichtung beschädigt wird.

Es ist auch bereits bekannt, die Schliess- und Zuhaltekraft durch unmittelbare Messung der Abstandsänderung zwischen den Werkzeugaufspannplatten zu ermitteln. Auch diese Messmethode ist jedoch nicht einwandfrei, weil die Werkzeugaufspannplatten sich unter der auftretenden Belastung verformen, wobei die Verformung jedoch abhängig von der Werkzeuggrösse ist. Um deshalb die tatsächlich auftretende Zuhaltekraft ermitteln zu können, wäre für jede Werkzeuggrösse bei diesem Messverfahren eine neue Eichung erforderlich.

Gemeinsam ist den bekannten Messverfahren, dass die zur Messung herangezogenen elastischen Verformungen der entsprechenden Teile der Schliesseinrichtung sehr klein sind, so dass die Einstellung und Eichung verhältnismässig schwierig ist und die Messungen mit einem vergleichsweise hohen Fehler belastet sein können.

Es ist von Kniehebelpressen bereits bekannt, zur Messung der Presskraft die elastische Durchwölbung der Endplatte zu messen, an der sich der Kniehebelmechanismus abstützt (US-A- 170 467 und US- A- 264 435). Um den kleinen Durchwölbungsbetrag sichtbar zu machen und zu einer ablesbaren Anzeige auszunützen, ist hierzu an der Endplatte ein Mess-Hebelmechanismus angeordnet, durch den der Verformungsweg mechanisch übersetzt und angezeigt wird. Zur Erzielung einer ausreichend grossen Anzeige muss jedoch die Messeinrichtung die Endplatte an der Stelle ihrer grössten Durchwölbung abtasten, was zur Folge hat, dass die Messeinrichtung an einer Stelle der Endplatte angeordnet ist, an der sie die Bewegung der beweglichen Aufspannplatte und des Kniehebelsystems behindern kann.

Aufgabe der vorliegenden Erfindung ist es daher, ein Messverfahren und eine dafür geeignete Vorrichtung vorzuschlagen, bei denen durch Messung einer elastischen Verformung der Endplatte ein weitgehend genauer Rückschluss auf die tatsächlich auftretende Schliess- und Zuhaltekraft am Werkzeug gezogen werden kann, ohne dass aber die Messvorrichtung beeinträchtigt werden kann oder den Betrieb der Giessmaschine behindert.

Erfindungsgemäss wird diese Aufgabe dadurch gelöst, dass als Mass für die Schliess- und Zuhaltekraft die Änderung des Abstandes zwischen zwei Punkten der Endplatte ermittelt wird, deren Verbindungslinie zumindest angenähert quer zu den Holmen verläuft.

Die Erfindung nützt die Erkenntnis aus, dass an der Endplatte aufgrund der durch die Holme einerseits und durch den Kniehebelmechanismus andererseits eingeleiteten Kräfte eine Biegeverformung auftritt, die der auftretenden Zuhaltekraft direkt proportional ist, wobei eine ggf. unterschiedliche Kraftbeaufschlagung der vier Holme sich in der Grösse der Biegeverformung ausprägt. Das Messergebnis ist somit unabhängig von einer ungleichen Kraftverteilung der Zuhaltekraft, damit auch unabhängig von Einflüssen, die durch Höhe und Eigensteifigkeit des Werkzeuges bedingt sind, weil diese keine Verformungsauswirkungen an der Endplatte mehr haben. Ein wesentlicher Vorteil besteht nun darin, dass durch die Biegeverformung der End-

platte auch eine Distanzänderung zwischen solchen Punkten der Endplatte auftritt, deren Verbindungslinie angenähert quer zu den Holmen verläuft. So entfernen sich z.B. aufgrund der auf die Endplatte wirkenden Kräfte die Bereiche der Endplatte, in denen die Anlenkstellen des Kniehebelmechanismus liegen, voneinander, und diese Distanzänderung ist, wie sich gezeigt hat, erheblich grösser als beispielsweise diejenige elastische Längenänderung der Holme, die unter den auftretenden Zugkräften an diesen auftritt. Hinzu kommt, dass es zur Erfassung dieser Distanzänderung nicht erforderlich ist, die Verformung der Endplatte in einem Bereich abzutasten, in dem durch die Messeinrichtung eine Störung des Betriebes auftreten könnte. Es ist vielmehr möglich, als Mass für die Schliess- und Zuhaltekraft die Änderung des Abstandes zwischen zwei Punkten der Endplatte zu ermitteln, deren Verbindungslinie zumindest angenähert radial, d.h. quer zu den Holmen, verläuft.

Vorteilhafterweise wird die Änderung des Abstandes zwischen zwei Punkten der Endplatte ermittelt, welche jeweils im Bereich der beiden Anlenkstellen des Kniehebelmechanismus an der Endplatte liegen. Denn diese Abstandsänderung und damit der ermittelte Messwert sind am grössten. Es bestehen daher keine Einstell- und Eichschwierigkeiten, und es hat sich gezeigt, dass der Messfehler bei der Ermittlung der Zuhaltekraft bei dem erfindungsgemässen Verfahren nur in der Grössenordnung von 1,5% liegt.

Die erfindungsgemässe Vorrichtung zum Messen der Werkzeug-Schliess- und Zuhaltekraft ist an einer Schliesseinrichtung vorgesehen, die einen sich zwischen einer Werkzeugaufspannplatte und einer Endplatte abstützenden Kniehebelmechanismus aufweist, wobei die Werkzeugaufspannplatte und die Endplatte auf Holmen angeordnet sind und ein Messelement vorgesehen ist, das eine elastische Verformung an einem Teil der Schliesseinrichtung ermittelt und in eine analoge Grösse als Mass für die Schliess- und Zuhaltekraft umwandelt. Erfindungsgemäss ist das Messelement zwischen zwei voneinander entfernten Messpunkten an der Endplatte angeordnet, deren Verbindungslinie zumindest angenähert quer zu den Holmen verläuft.

Das Messelement kann dabei zwischen zwei radial bezüglich der Mittelachse der Schliesseinrichtung voneinander entfernten Messpunkten an der Endplatte angeordnet sein und deren Abstandsänderung aufgrund der auftretenden Biegeverformung ermitteln. Der grösste Messweg ist jedoch erzielbar, wenn das Messelement nach einer weiteren Ausgestaltung der Erfindung zwischen zwei Punkten der Endplatte im Bereich jeweils der Anlenkstellen des Kniehebelmechanismus an der Endplatte angeordnet ist. Die Anlenkstellen des Kniehebelmechanismus an der Endplatte liegen nämlich bezüglich der Achse der Schliesseinrichtung ausserhalb der Angriffsstellen der Holme an der Endplatte. Einerseits wird dadurch das bei der erfindungsgemässen Messmethode ausgenützte Biegemoment erzeugt, das zur Biegeverformung der Endplatte führt. Andererseits besteht quer zur Längsachse der Giessmaschine auch hierdurch ein verhältnismässig grosser Abstand zwischen den Messpunkten, die sich in entgegengesetzter Richtung bei der Verformung bewegen. Die Verformung zwischen diesen Punkten wird umso deutlicher, wenn - wie das üblich ist - die Anlenkstellen des Kniehebelmechanismus an axial zur Werkzeugseite hin vorspringenden Laschen oder Ansätzen der Endplatte angreifen.

Die erfindungsgemässe Messeinrichtung kann auch auf einfache Weise an bereits bestehenden und im Einsatz befindlichen Giessmaschinen angeordnet werden. In diesem Fall ist an einer Seitenfläche der Endplatte im Bereich der Anlenkstelle des Kniehebelmechanismus ein sich über die werkzeugabgewandte Stirnfläche der Endplatte hinaus erstreckender Messbalken befestigt, zwischen dessen freiem Ende und einem radial weiter innen liegenden Punkt der Endplatte das Messelement angeordnet wird. Der Messbalken überträgt die Verformung der Endplatte nach hinten, wobei es bei entsprechender Bemessung möglich ist, diese Verformung noch in einem bestimmten Verhältnis zu vergrössern.

Im Rahmen der Erfindung kann praktisch jede eine elastische Verformung aufnehmende Messmethode eingesetzt werden. Aufgrund des verhältnismässig grossen Verformungsweges bietet sich aber eine Induktiv- oder Kapazitiv-Messung an, deren Messwert unmittelbar angezeigt und auch zur Einstellung der Werkzeughöhe bei notwendigen Änderungen der Zuhaltekraft ausgenutzt werden kann. Aber auch eine Messung mittels Dehnmessstreifen oder Piezo-Elementen ist möglich, wenn zwischen den Messpunkten, z.B. im Bereich der Anlenkstellen des Kniehebelmechanismus, ein durch die Verformung der Endplatte belastbares Element, z.B. ein Dehnstab, angeordnet wird, dessen Verformung ermittelt wird. In letzterem Fall muss der Dehnstab so nachgiebig ausgeführt sein, dass er die auftretenden elastischen Verformungen nicht merklich behindert.

Ausführungsbeispiele der Erfindung werden nachfolgend anhand der beiliegenden Zeichnungen näher erläutert. In den Zeichnungen zeigen:

Fig. 1 eine rein schematische Seitenansicht einer Schliesseinrichtung für eine Spritzgiessmaschine zur Verarbeitung von Kunststoffen mit einer ersten Ausführungsform der Messvorrichtung nach der Erfindung, und

Fig. 2 eine zur Fig. 1 analoge Darstellung mit einer zweiten Ausführungsform der Messvorrichtung.

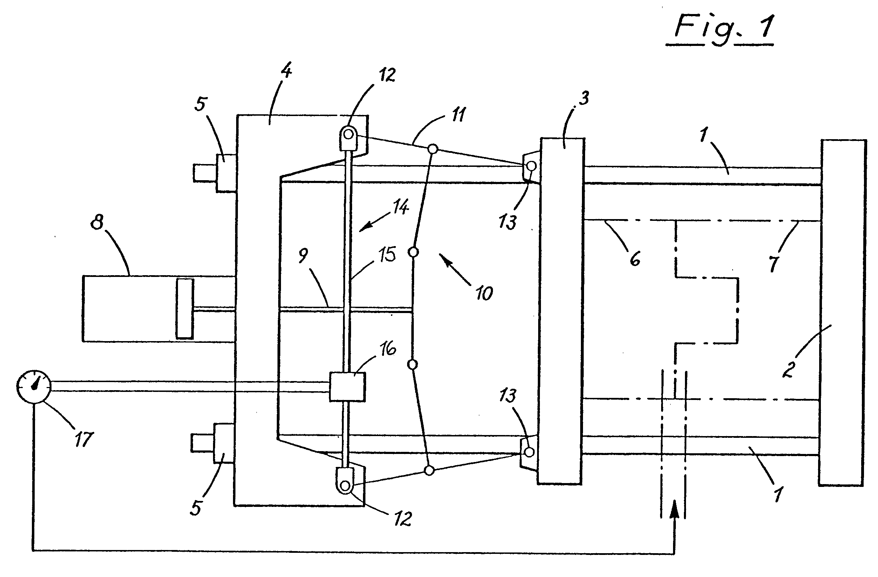

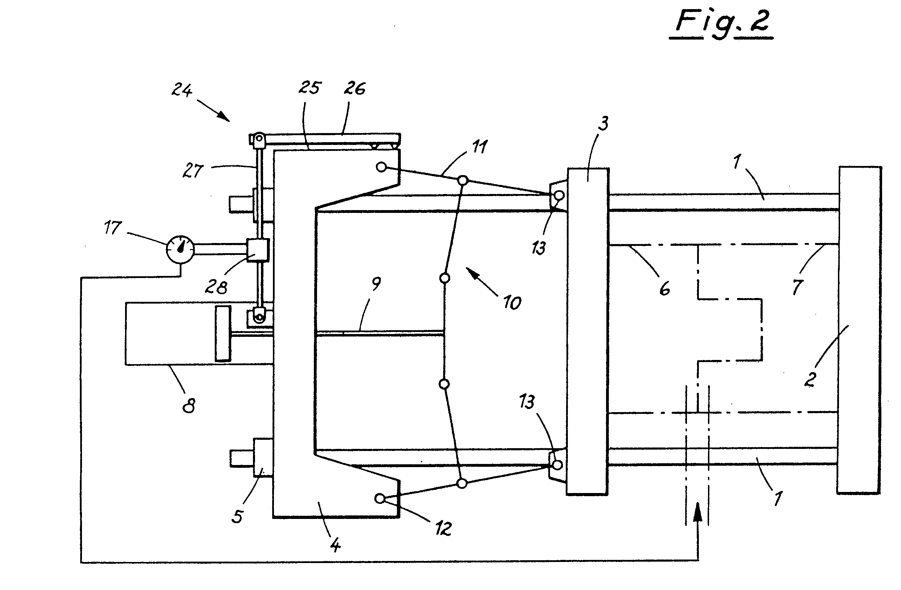

In den Fig. 1 und 2 sind die Schliesseinrichtung und die damit zusammenwirkenden Teile der Spritzgiessmaschine dünn ausgezogen dargestellt, während die eigentliche Messvorrichtung zur Verdeutlichung dick gezeichnet ist. Die Spritzgiessmaschine besitzt Holme 1, an deren einem Ende eine feststehende Werkzeugaufspannplatte 2 befestigt ist, während eine bewegliche Werkzeugaufspannplatte 3 sowie eine Endplatte 4 darauf verschiebbar sind. Die Endplatte 4 stützt sich auf den Holmen 1 über Stellmuttern 5 ab, die ggf. mit einer nicht gezeigten Vorrichtung zur gemeinsamen Verstellung zum Zweck der Einstellung der Werkzeughöhe verbunden sind. Diese Vorrichtung weist beispielsweise eine Zahnkette auf, die über an den Stellmuttern 5 vorgesehene Zahnräder geführt und von einem in Abhängigkeit der gewünschten Werkzeugeinstellung gesteuerten Motor angetrieben ist.

Zwischen den Werkzeugaufspannplatten 2, 3 sind strichpunktiert die Formhälften 6, 7 des Werkzeuges angedeutet.

Auf der Rückseite der Endplatte 4 ist ein Hydraulikzylinder 8 befestigt, dessen Kolbenstange 9 durch die Endplatte 4 hindurchgeführt ist und auf den Mittelteil eines im Ganzen mit 10 bezeichneten Kniehebelmechanismus wirkt. Der Kniehebelmechanismus dient sowohl zur raschen Werkzeugschliessung als auch zur Verriegelung und Erzeugung der Zuhaltekraft. Die äusseren Lenker 11 des Kniehebelmechanismus 10 sind einerseits an vorspringenden Anlenkaugen 12 der Endplatte 4, andererseits an An- lenkaugen 13 der beweglichen Werkzeugauf- spannplatte 3 angelenkt. Die Anlenkaugen 12 liegen - bezogen auf die Kolbenstange 9 - ausserhalb der Kraftangriffsstelle der Holme 1 an der Endplatte 4. Durch diese Art der Krafteinleitung in die Endplatte 4 entsteht beim Aufbringen der Zuhaltekraft im Werkzeug ein Biegemoment in der Endplatte 4, das diese in einer Weise verformt, die eine gegenseitige Entfernung der Anlenkaugen 12 voneinander zur Folge hat. Da die in den äusseren Lenkern 11 und in den Holmen 1 auftretenden Kräfte direkt proportional der Zuhaltekraft sind, gilt dies auch für das in der Endplatte 4 wirksame Biegemoment und folglich auch für die dadurch hervorgerufene Biegeverformung.

Zwischen den Anlenkaugen 12 der Lenker 11 ist eine im Ganzen mit 14 bezeichnete Mess- vorrichtung angeordnet, deren Messaufnehmer- teil im wesentlichen aus einem Messstab 15 und einer Spule 16 besteht. Sowohl der Messstab 15 als auch die Spule 16 sind an den Anlenkaugen 12 gelenkig befestigt. Der Messstab 15 bildet für die Spule 16 einen Kern, so dass sich bei auftre- tenden Verschiebungen zwischen den Anlenk- augen 12 die Lage des Kernes relativ zur Spule 16 und damit auch deren Induktion verändert. Die Induktionsänderung kann mittels eines Messgerätes 17 - ggf. nach vorheriger Verstärkung - gemessen werden. Durch eine Verbindungslinie mit Pfeil zu den beiden Werkzeughälften 6, 7 ist angedeutet, dass der von der Spule 16 gelieferte Messwert unmittelbar als Istwert zur Einstellung der Werkzeug-Sollhöhe herangezogen werden kann. Hierzu wird - ohne dass dies in der Zeichnung angegeben ist - der von der Spule 16 gelieferte Istwert der Werkzeugzuhaltekraft in eine Schaltung eingegeben, die diesen Istwert mit dem Sollwert der Werk- zeugzuhaltekraft vergleicht und bei Abweichun- gen davon die obengenannte Vorrichtung zur Verstellung der Stellmuttern 5 betätigt.

In Fig. 2 sind die Teile der Spritzgiessmaschine, da sie unverändert sind, mit den glei- chen Bezugszeichen wie in Fig. 1 versehen. Die Messvorrichtung 24 ist jedoch bei dieser Ausführungsform nicht zwischen den Anlenkaugen 12 der Endplatten 4 angeordnet, sondern auf der Aussenseite der Endplatte 4, so dass es möglich ist, die Messvorrichtung auch bei bereits bestehenden und im Einsatz befindlichen Spritz- giessmaschinen nachträglich anzubringen. Hier- zu ist an der obenliegenden Seitenfläche 25 der Endplatte 4, die im wesentlichen durch den Vorsprung gebildet wird, in welchem sich das Anlenkauge 12 befindet, ein Messbalken 26 starr befestigt. Die Befestigungsstelle des Messbalkens 26 liegt in der Nähe des Anlenkauges 12, d.h. möglichst weit am werkzeugzugewandten Rand der Seitenfläche 25. Das hintere Ende des Messbalkens 26 erstreckt sich geringfügig über die werkzeugabgewandte Stirnfläche der Endplatte 4 hinaus. Daran ist ein Messstab 27 angelenkt, der in gleicher Weise mit einer Spule 28 zusammenwirkt, wie dies bei der Fig. 1 erläutert worden ist. Die Spule 28 ist in der Nähe des Mittelpunktes der Endplatte 4 angelenkt. Die bei der Biegeverformung der Endplatte 4 auftretenden Abstandsänderungen zwischen dem freien End des Messbalkens 26 und dem Anlenkpunkt der Spule 28 werden in Induktionsänderungen der Spule 28 umgewandelt, die wieder durch das Messgerät 17 ermittelt werden können.

Bei dieser Ausführungsform liegt, wie erwähnt, die Messvorrichtung auf der Aussenseite der Endplatte 4, d.h. auch ausserhalb der Schutzabdeckung der Spritzgiessmaschine, und kann deshalb ohne grundsätzliche Schwierigkeiten nachträglich angebracht werden.

**Patentansprüche**

1. Verfahren zum Messen der Werkzeug- Schliess- und Zuhaltekraft an Druck- und Spritzgiessmaschinen, deren Schliesseinrichtung eine längs Holmen (1) bewegbare Werkzeugaufspannplatte (3) sowie einen an der Werkzeugaufspannplatte (3) angreifenden und sich an einer von den Holmen (1) gehaltenen Endplatte (4) ab- stützenden Kniehebelmechanismus (10) auf- weist, bei dem eine elastische Verformung an einem Teil der Schliesseinrichtung als Mass für die Schliess- und Zuhaltekraft ermittelt wird, dadurch gekennzeichnet, dass als Mass für die Schliess- und Zuhaltekraft die Änderung des Abstandes zwischen zwei Punkten der Endplatte (4) ermittelt wird, deren Verbindungslinie zumindest angenähert quer zu den Holmen (1) verläuft.

2. Verfahren nach Anspruch 1, dadurch gekennzeichnet, dass die Änderung des Abstandes zwischen zwei Punkten der Endplatte (4) ermittelt wird, die jeweils im Bereich der beiden Anlenkstellen (12) des Kniehebelmechanismus (10) an der Endplatte (4) liegen.

3. Vorrichtung zum Messen der Werkzeug-Schliess- und Zuhaltekraft an Druck- und Spritzgiessmaschinen, deren Schliesseinrichtung einen sich zwischen einer Werkzeugaufspannplatte (3) und einer Endplatte (4) abstützenden Kniehebelmechanismus (10) aufweist, wobei die Werkzeugaufspannplatte (3) und die Endplatte (4) auf Holmen (1) angeordnet sind, mit einem Messelement (15, 16; 27, 28), das eine elastische Verformung an einem Teil der Schliesseinrichtung ermittelt und in eine analoge Grösse als Mass für die Schliess- und Zuhaltekraft umwandelt, dadurch gekennzeichnet, dass das Messelement (15, 16; 27, 28) zwischen zwei voneinander entfernten Messpunkten an der Endplatte (4) angeordnet ist, deren Verbindungslinie zumindest angenähert quer zu den Holmen (1) verläuft.

4. Vorrichtung nach Anspruch 3, dadurch gekennzeichnet, dass das Messelement (15, 16; 27, 28) zwischen zwei Punkten der Endplatte (4) im Bereich jeweils der Anlenkstellen (12) des Kniehebelmechanismus (10) an der Endplatte (4) angeordnet ist.

5. Vorrichtung nach Anspruch 3 oder 4, dadurch gekennzeichnet, dass das Messelement (15, 16; 27, 28) ein Induktiv- oder Kapazitiv-Weggeber ist.

6. Vorrichtung nach einem der Ansprüche 3 bis 5, dadurch gekennzeichnet, dass an einer Seitenfläche (25) der Endplatte (4) im Bereich einer Anlenkstelle (12) des Kniehebelmechanismus (10) ein sich über die werkzeugabgewandte Stirnfläche der Endplatte (4) hinaus erstreckender Messbalken (26) befestigt ist, und dass das Messelement (27, 28) zwischen dem freien Ende des Messbalkens (26) und einem in Richtung zur Mittelachse der Schliesseinrichtung weiter innen liegenden Punkt der Endplatte (4) angeordnet ist.

7. Vorrichtung nach Anspruch 3, dadurch gekennzeichnet, dass das Messelement an einem Verbindungselement zwischen zwei Punkten der Endplatte angeordnet ist und die Abstandsänderung eines weiteren Punktes der Endplatte (Durchwölbung) von dem Verbindungselement misst.

8. Vorrichtung nach einem der Ansprüche 3 bis 6, dadurch gekennzeichnet, dass das Messelement in Reihe mit einem elastisch leicht verformbaren Bauteil, z.B. mit enem Dehnstab, geschaltet und ein Kraftgeber ist.

## Revendications

1. Procédé pour la mesure des forces de fermeture et de serrage de l'outil dans des machines de moulage sous pression et par injection, dont l'installation de fermeture comporte une plaque de fixation d'outil (3) mobile le long de longerons (1), comme aussi un mécanisme à levier à genouillère (10) faisant prise sur la plaque de fixation d'outil (3) et s'appuyant sur une plaque d'extrémité (4) maintenue par les longerons (1) conformément auquel une déformation élastique imposée à une partie de l'installation de fermeture est exploitée comme mesure pour les forces de fermeture et de serrage, caractérisé en ce que, à titre de mesure des forces de fermeture et de serrage, on exploite la variation de la distance entre deux points de la plaque d'extrémité (4) dont la ligne de liaison court au moins pratiquement transversalement par rapport aux longerons (1).

2. Procédé suivant la revendication 1, caractérisé en ce que l'on exploite la variation de la distance entre deux points de la plaque d'extrémité (4) qui se trouvent chacun dans la zone ou secteur des deux endroits d'articulation (12) du mécanisme à levier à genouillère (10) à la plaque d'extrémité (4).

3. Dispositif pour la mesure des forces de fermeture et de serrage de l'outil dans des machines de moulage sous pression et par injection, dont l'installation de fermeture comporte un mécanisme à levier à genouillère (10) s'appuyant entre une plaque de fixation d'outil (3) et une plaque d'extrémité (4), où la plaque de fixation d'outil (3) et la plaque d'extrémité (4) sont agencées sur des longerons (1) et comportant un élément de mesure (15, 16; 27, 28) qui exploite une déformation élastique d'une partie de l'installation de fermeture et convertit cette déformation en une grandeur analogue servant de mesure des forces de fermeture et de serrage, caractérisé en ce que l'élément de mesure (15, 16; 27, 28) est agencé entre deux points de mesure sur la plaque d'extrémité (4) mutuellement éloignés, dont la ligne de liaison court au moins pratiquement transversalement par rapport aux longerons (1).

4. Dispositif suivant la revendication 3, caractérisé en ce que l'élément de mesure (15, 16; 27, 28) est agencé entre deux points de la plaque d'extrémité (4) dans la zone ou secteur des endroits d'articulation (12) du mécanisme à levier à genouillère (10) sur la plaque d'extrémité (4).

5. Dispositif suivant l'une quelconque des revendications 3 et 4, caractérisé en ce que l'élément de mesure (15, 16; 27, 28) est un indicateur de trajet à induction ou à capacité.

6. Dispositif suivant l'une quelconque des revendications 3 à 5, caractérisé en ce qu'une poutre de mesure (26) qui s'étend au-dessus par-delà de la surface frontale éloignée de la plaque d'extrémité (4), est assujettie à une surface latérale (25) de la plaque d'extrémité (4) dans la zone ou secteur d'un endroit d'articulation (12) du mécanisme à levier à genouillère (10) et en ce que l'élément de mesure (27, 28) est agencé entre l'extrémité libre de la poutre de mesure (26) et un point de la plaque d'extrémité (4) situé plus à l'intérieur en direction de l'axe médian de l'installation de fermeture.

7. Dispositif suivant la revendication 3, caractérisé en ce que l'élément de mesure est assujetti à un élément de liaison entre deux points de la plaque d'extrémité et mesure la variation de distance d'un autre point de la plaque d'extrémité (bombement) de l'élément de liaison.

8. Dispositif suivant l'une quelconque des revendications 3 à 6, caractérisé en ce que l'élément de mesure est raccordé en série avec un organe de construction à déformation élastique facile, par exemple une tige d'allongement, et constitue un transmetteur de force.

**Claims**

1. Process for measuring the mould clamping force and locking force on die-casting and injection-moulding machines, whose clamping device comprises a mould platen (3) which can be moved along tiebars as well as a toggle mechanism (10) which engages on the mould platen (3) and is supported against an end plate (4) held by the tiebars (1), in which process an elastic deformation on a part of the clamping device is determined as a measure of the clamping force and locking force, characterised in that, as a measure of the clamping force and locking force, the change of distance between two points on the end plate (4), the line connecting these points running at least approximately transversely to the tiebars (1), is determined.

2. Process according to Claim 1, characterised in that the change of distance between two points of the end plate (4), which are respectively located in the zone of the two hinge points (12) of the toggle mechanism (10) on the end plate (4), is determined.

3. Device for measuring the mould clamping force and locking force on die-casting and injection moulding machines, whose clamping device comprises a toggle mechanism (10) supported between a mould platen (3) and an end plate (4), the mould platen (3) and the end plate (4) being located on tiebars (1), with a measuring element (15, 16; 27, 28) which determines an elastic deformation on a part of the clamping device and converts it to an analogous parameter as a measure of the clamping force and locking force, characterised in that the measuring element (15, 16; 27, 28) is located between two separated points of measurement on the end plate (4), the line connecting these points running at least approximately transversely to the tiebars (1).

4. Device according to Claim 3, characterised in that the measuring element (15, 16; 27, 28) is located between two points on the end plate (4) in the respective zones of the two hinge points (12 of the toggle mechanism (10) on the end plate (4).

5. Device according to Claim 3 or 4, characterised in that the measuring element (15, 16; 27, 28) is an inductive or capacitive position sensor.

6. Device according to one of Claims 3 to 5, characterised in that a measuring beam (26), extending beyond the end face, pointing away from the mould, of the end plate (4) is attached to one side face (25) of the end plate (4) in the zone of a hinge point (12) of the toggle mechanism (10), and that the measuring element (27, 28) is located between the free end of the measuring beam (26) and a point on the end plate (4) which is located further inward, in a direction towards the central axis of the clamping device.

7. Device according to Claim 3, characterised in that the measuring element is located on a connecting element between two points on the end plate and measures the change in distance of an additional point of the end plate (doming) from the connecting element.

8. Device according to one of Claims 3 to 6, characterised in that the measuring element is connected in series with an elastically easily deformable component, for example with an extension bar, and is a force-measuring sensor.

Fig. 1

_Fig.2_